# NEUE EUROPÄISCHE PATENTSCHRIFT

(11) **EP 0 863 252 B2**
(45) Veröffentlichungstag und Bekanntmachung des Hinweises auf die Entscheidung über den Einspruch: **01.12.2004**
(45) Hinweis auf die Patenterteilung: 05.06.2002
(21) Anmeldenummer: 98101954.0
(22) Anmeldetag: 05.02.1998
(51) Int. Cl.: D21F 1/78

(54) **Verfahren und Vorrichtung zum Entwässern einer Faserstoffsuspension**
Process and apparatus to dewater a fiber suspension
Procédé et appareil pour déshydrater une suspension de fibres

(30) Priorität: 06.03.1997 DE 29704062 U
(43) Veröffentlichungstag der Anmeldung: 09.09.1998
(73) Patentinhaber: Voith Paper Patent GmbH, 89522 Heidenheim (DE)
(72) Erfinder: Gommel, Axel, 88212 Ravensburg (DE); Sepke, Paul-Wilhelm, 88214 Ravensburg-Weissenau (DE)

(56) Entgegenhaltungen:
- WO-A-94/08088
- DE-C- 603 025
- DE-U- 7 519 093
- US-A- 1 421 364
- US-A- 2 278 525
- "The Bleaching of Pulp", TAPPI Monograph Series No. 10, 1953, Seiten 304-314

## Beschreibung

Die Erfindung betrifft ein Verfahren zum Entwässern einer Faserstoffsuspension gemäß Anspruch 1.

Derartige Verfahren werden angewendet, um entweder die Stoffdichte der Faserstoffsuspension zu erhöhen oder um unerwünschte Bestandteile durch Waschen aus der Faserstoffsuspension zu entfernen. Dabei sind beide Vorgänge mehr oder weniger stark miteinander verbunden, denn zum Waschen einer Faserstoffsuspension ist selbstverständlich das Entwässern notwendig. Anderseits hängt aber das Ausmaß des Wascheffektes von weiteren Parametern, also nicht nur der Erhöhung der Stoffdichte, ab. Verfahren der oben genannten Art können z.B. mit bekannten Vorrichtungen zum Entwässern einer Faserstoffsuspension, den sogenannten Trommel-Eindickern, ausgeführt werden. Diese bilden auf der Außenseite einer in die Suspension eintauchenden Trommel ein Faservlies, das in das Innere der Trommel entwässert wird. Durch die Umfangsbewegung einer solchen Trommel wird das Faservlies aus dem Suspensionsbehälter heraustransportiert und kann als eingedickter Stoff entnommen werden. Er wird dann oft als Gutstoff bezeichnet. Es sind auch schon Maßnahmen zur weiteren Erhöhung der Stoffdichte des aus der Suspension bereits herausgeführten, noch an der Trommel haftenden Stoffes durchgeführt worden. Hierzu werden insbesondere sogenannte Gautschwalzen verwendet, die einen zusätzlichen Druck auf das Faservlies erbringen. Oder man preßt ein umlaufendes Band gegen das Vlies, wie z.B. gemäß US-A-2,278,525 oder WO 94/08088 A. Solche Maßnahmen bringen zwar in der Regel eine weitere Erhöhung der Stoffdichte, diese ist aber oft immer noch zu gering und wird außerdem z.B. durch Rückbefeuchtung beim Austritt aus dem Preßspalt zum Teil wieder reduziert

Bei einem Trommeleindicker gemäß US-A-1,421,364 ist der Trog im Betrieb vollständig mit Suspension gefüllt. Die polygonförmige Außenfläche der Trommel fördert den eingedickten Stoff entlang gewölbter Dichtflächen heraus.

WO 96/08600 beschreibt eine weitere Entwässerungsvorrichtung. Diese enthält ebenfalls eine rotierende Trommel mit durchlässiger Oberfläche. Auf einem Teil des Umfanges ist die Trommel von einem undurchlässigen Kunststoffband umgeben. Die Suspension wird mit Hilfe eines Stoffauflaufes in den sich zwischen Trommel und Kunststoffband bildenden Spalt eingespritzt In diesem Bereich, in dem der Stoffstrahl an die Trommelwandung gelangt, wird von innen ein Unterdruck angelegt. Diese Maschine ist sehr aufwendig zu bauen und zu betreiben.

Die US-A-4,750,340 zeigt eine zum Eindicken geeignete Vorrichtung mit einer drehbar angetriebenen, perforierten Trommel, welche durch ein gewölbtes Blech umgeben ist, das geringfügig exzentrisch zur Trommel angebracht ist. Dadurch bildet sich zwischen Trommel und der Wand ein Preßspalt, in den bereits voreingedickter Stoff über eine Förderschnecke eingetragen wird. Die Vorrichtung ist sehr aufwendig und besonders für höhere Ausgangsstoffdichten geeignet.

Der Erfindung liegt die Aufgabe zugrunde, ein Verfahren der eingangs genannten Art zu finden und derart zu gestalten, daß eine gute Entwässerungsleistung bei hoher Betriebssicherheit erzielt wird.

Diese Aufgabe wird durch die Kennzeichen des Anspruchs 1 erfüllt. Vorteilhafte Ausführungsformen werden in den abhängigen Ansprüchen definert. Ansprüche 19 und 20 definieren einen Trommeldicker zur Durchführung des Verfahrens.

Das neue Verfahren gestattet es z.B., den an sich bekannten, wirkungsvollen und zuverlässigen Prozeß der Trommeleindickung weiter zu verbessern. Durch das Eintauchen einer perforierten Trommel in eine Suspension kann auf einfache Weise entwässert werden, wobei sich in die perforierte Außenseite einer solchen Trommel der Faserstoff mehr oder weniger stark hineinsetzt. Die dabei auftretenden Kräfte reichen aus, um den eingedickten Faserstoff mit Hilfe der Trommelbewegung aus der Suspension herauszubefördern. In dem sich anschließenden Bereich, in dem ein Sieb, Band oder Preßschuh derart angebracht ist, daß sich zwischen Trommelwand und dem Sieb eine Relativgeschwindigkeit ergibt, kann der dazwischen befindliche, eingedickte Faserstoff durch Scherkräfte aufgelockert und zerrissen werden.

Was vorstehend anhand eines Trommeleindikkers erläutert wurde, läßt sich ohne weiteres auch auf andere Maschinen übertragen, bei denen aus einem mit Suspension gefüllten Gefäß durch eine bewegte perforierte Fläche hindurch entwässert wird. Das trifft auch bei Scheibenfiltem zu. Derartige Maschinen enthalten perforierte Hohlscheiben mit horizontaler Achse, in denen sich das Filtrat sammelt und entfernt wird. Durch die Bewegung derartiger Scheiben wird der voreingedickte, an den Außenseiten haftende Faserstoff aus dem Suspensionssumpf heraustransportiert und gelangt dann in den Eindickungsbereich. Im Eindickungsbereich einer derartigen Maschine kann ein stillstehendes, flexibles Band oder ein Preßschuh gegen die perforierte Scheibe gedrückt werden. Bei solch einer Ausgestaltung des Verfahrens ist zwar der Aufbau der benötigten Vorrichtungen ungleich komplizierter als bei einer Trommel, insbesondere was Gestaltung des Eindikkungsbereiches und Abfuhr des fertig eingedickten Faserstoffes betrifft, andererseits lassen sich aber auf relativ kleinem Raum Apparate mit hohem Durchsatz unterbringen. Bekanntlich gibt es nicht nur Scheibenfilter mit einer Scheibe, sondern - und das ist die Regel-mit mehreren Scheiben axial nebeneinander.

Ein beträchtlicher Vorteil des neuen Verfahrens liegt in der Aufwärtsbewegung des so eingedickten Faserstoffes vor dem Eintritt in den Eindickungsbereich. Es können nämlich die Anteile von geringerer Stoffdichte, die sich an der der Fläche abgewandten Seite der Faserstoffschicht befinden, von selbst abfließen und gelangen nicht in den Eindickungsbereich. Somit ist der Faserstoff in diesem Bereich relativ homogen vorentwässert. Das ist u.a. eine günstige Voraussetzung für die nachstehend beschriebene Röllchenbildung.

Je nach eingestellten Bedingungen ist es nämlich möglich, daß die Faserstoffschicht im Eindickungsbereich aufreißt und Agglomerate bildet, die dann eine Rollbewegung ausführen. Diese Rollbewegung führt zu einer besonders wirksamen Kompaktierung des Faserstoffes. Es hat sich auch gezeigt, daß in vielen Fällen der Durchmesser der so gebildeten Röllchen größer wird als die Dicke der sie umgebenden eingedickten Faserschicht. Dadurch konzentriert sich dann die Preßwirkung besonders auf die Röllchen und trägt zur gesteigerten Entwässerung der Röllchen bei. Wenn auch die zweite Fläche wasserdurchlässig gewählt ist, kann das durch sie hindurchgetretene Wasser in den Bereich abfließen, der, in Laufrichtung (der ersten Fläche) gesehen, später liegt und dortwiederdurch diezweite Fläche zurückfließen. Da hier die Faserstoffschicht aufgerissen ist, findet das Wasser Platz zum Durchtritt durch die erste Fläche. Die Wasserabfuhr aus der zweiten Fäche 2 ist damit recht einfach. Dabei kann der Eindickungsbereich bzw. der perforierte Teil der zweiten Fläche mit Vorteil nahe dem höchsten Punkt beginnen, damit das Wasser in Laufrichtung (der ersten Fläche) frei abfließt Die durch die äußeren Preßkräfte stark zusammengedrückten Röllchen nehmen kein Wasser auf; die Rückbefeuchtung bleibt also gering.

Mit der Erfindung ist es möglich, eine Röllchenbildung auch ohne zusätzlich angelegten Unterdruck im Eindickungsbereich herbeizuführen.

Die einzudickende Suspension kann anfangs durchaus einen sehr geringen Feststoffgehalt, z.B. unter 1 % haben. Bei entsprechend guter Führung des Verfahrens läßt sich dennoch ein eingedickter Faserstoff mit einem Feststoffgehalt zwischen 20 und 30 % herstellen, was eine mengenmäßig bedeutsame Abscheidung von Wasser bedeutet. Aus diesen Gründen ist das Verfahren geeignet, beim Entwässern der Suspension unerwünschte Bestandteile mit gutem Effekt auszuwaschen.

Die Erfindung wird beschrieben und erläutert anhand von schematischen Zeichnungen. Dabei zeigen:
- Fig. 1: einen zur Durchführung des Verfahrens geeigneten Trommeleindicker;
- Fig. 2: einen weiteren Trommeleindicker;
- Fig. 3a und 3b: einen erfindungsgemäß gestalteten Scheibenfilter.

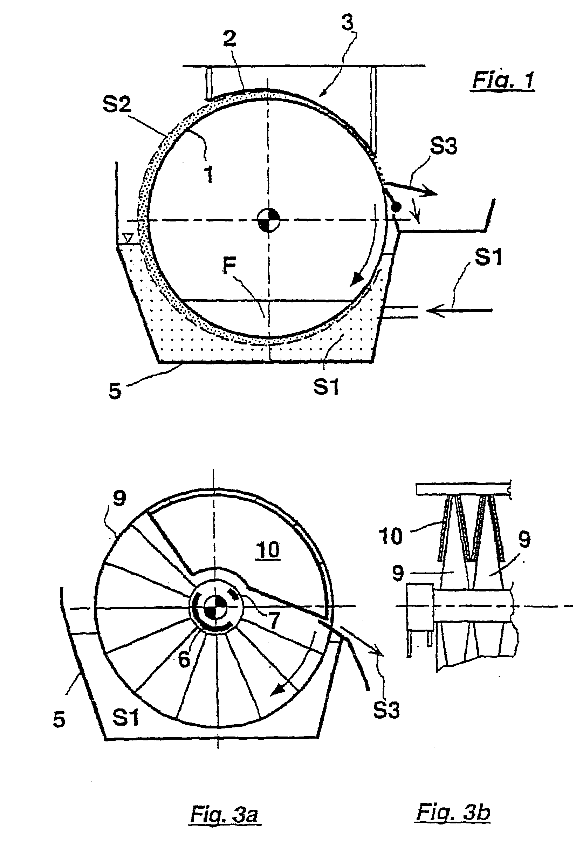

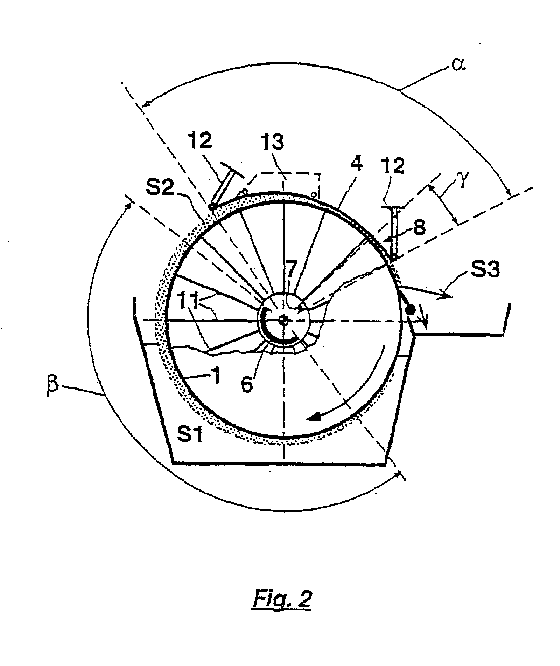

In der in Fig. 1 gezeigten Eindickvorrichtung ist die erste Fläche 1 in Form eines zylindrischen perforierten Siebkörpers dargestellt, wobei nur wenige der sehr zahlreichen Öffnungen gezeichnet sind. Die Öffnungen gehören mit Vorteil zu einem auf einen Rotorgrundkörper aufgespannten Siebgewebe. Der Siebkörper taucht in ein Suspensionsgefäß 5 ein, welches bei Durchführung des Verfahrens zu einem gewissen Teil mit der einzudickenden Suspension S1 gefüllt ist. Wegen des hydrostatischen Druckes der Suspension S1 wird diese am eingetauchten Teil der ersten Fläche 1 entwässert, d.h. Filtrat F fließt in das Innere und kann z.B. axial entfernt werden. Infolge der Rotationsbewegung der Fläche 1 taucht die an ihr anhaftende, voreingedickte Suspension S2 aus dem Sumpf auf und gelangt dann in den Eindickungsbereich 3. Dieser enthält die zweite Fläche 2. Da diese stillsteht, ergibt sich durch die Rotationsbewegung der ersten Fläche 1 eine Relativbewegung, welche die Entwässerungswirkung entscheidend verbessert. Besonders günstig ist es, die zweite Fläche 2 als flexibles, gespanntes Band 4 (Fig.2) auszuführen, insbesondere da sich dadurch stetige Druckverhältnisse im Eindickungsbereich 3 einstellen lassen. Bei unterschiedlich dicker Faserstoffschicht kann ein solches Band ausweichen, und der Anpreßdruck ist leicht einstellbar. Grundsätzlich sind aber auch eine oder mehrere starre Flächen denkbar, sofern sie eine geeignete Form und Oberfläche haben. Nach Durchlaufen des Eindickungsbereiches 3 läuft ein eingedickter Faserstoff S3 von der Fläche 1, z.B. an einem Schaber ab. Wenn die zweite Fläche 2 ebenfalls wasserdurchlässig ist und für eine Wasserableitung von dieser Fläche gesorgt wird, kann der Endtrockengehalt weiter gesteigert werden. Je nach Wahl der Parameter können für den eingedickten Faserstoff höhere Stoffdichten - ca. 30 % - oder auch geringere - ca. 15 bis 20 % - erreicht werden.

Obwohl es sich bei der hier dargestellten Vorrichtung um eine recht einfach aufgebaute Maschine handelt, können bei Verwendung des erfindungsgemäßen Verfahrens recht große Wassermengen aus dem Stoff entfernt werden.

Wird höhere Durchsatzleistung oder höherer Trockengehalt gewünscht, läßt sich das Verfahren dadurch verbessern, daß die Vorentwässerung nicht nur aufgrund der hydrostatischen Höhe abläuft, sondern mit zusätzlich angelegtem Unterdruck verstärkt wird. Ähnliches gilt eventuell auch für den Eindickungsbereich. Dazu kann auf der Innenseite der Trommelfläche ein Saugkasten vorhanden sein, mit dem an raumfesten Stellen das Filtrat abgesaugt wird. Er ist genügend bekannt und daher nicht gezeichnet.

In anderen Fällen ist es vorteilhaft, die Trommel- oder auch Filterscheibe in Sektoren einzuteilen und diese Sektoren über einen zentralen Steuerkopf mit Unterdruck zu belegen. Je feiner die Sektionierung der Trommel gewählt ist, desto präziser und effektiver wird der Unterdruck genutzt. Diese Technik ist aus dem Bau von Scheibenfiltern bekannt.

Fig. 2 zeigt einen sektionierten Trommeleindicker, bei dem die Trommel durch radiale Trennwände 11 in Kammern unterteilt ist. Die zweite Fläche ist hier als flexibles Band 4 ausgebildet, das durch Spannvorrichtungen 12 gespannt und gegen die die erste Fläche 1 bildende Trommel gedrückt wird. Dabei überspannt es die erste Fläche 1 über einen Umfangswinkel a von etwa 95°. Es kann vollständig oder in einer Teillänge wasserdurchlässig sein. Wie bereits erwähnt, kann durch Sektionierung der Trommel der angelegte Unterdruck in Abhängigkeit vom Umlaufwinkel gesteuert werden. Diese Möglichkeit ist durch ringförmige Nuten 6 bzw. 7 in der Nähe der Drehachse lediglich angedeutet. Durch derartige Maßnahmen ist es möglich, z.B. auf einem ersten Umfangswinkel β die Vorentwässerung zu beeinflussen und im Verlauf des zweiten Umfangswinkels γ die Wirkung im Eindickungsbereich. Während der höhte Unterdruck in der Vorentwässerungszone überwiegend der Mitnahme einer größeren Menge von vorentwässerter Suspension S2 dient, erreicht man durch das Absaugen am Ende der Nachentwässerungszone eine Reduktion der Rückbefeuchtung. Die Länge der letztgenannten Absaugzone kann relativ kurz sein, da es sich hier um freies Wasser handelt. Günstig und ausreichend sind 10 bis 100 mm. Selbstverständlich kann auch durch das flexible Band 4 Unterdruck angelegt werden, wenn es wasserduchlässig ist. Als Alternative der Wasserentfemung am wasserdurchlässigen flexiblen Band 4 ist ein Wasserauffangkasten 13 mit axialen Abflüssen angedeutet.

Wie bereits erwähnte wurde, kann auch ein an sich bekanntes Scheibenfilter zur Durchführung des Verfahrens benutzt werden, wenn es entsprechend modifiziert ist.

Solche Modifikationen sind exemplarisch in Fig. 3a und 3b dargestellt. Dabei zeigt Fig. 3a in Seitenansicht und Fig. 3b als Schnitt die Filterscheiben 9. Diese tragen auf ihren Seiten die bei der Definition des Verfahrens erwähnte erste Fläche 1, welche sich also aus einer Mehrzahl von perforierten Seitenflächen zusammensetzt. Durch Rotation der Filterscheibe wird die voreingedickte Suspension S2 (hier nicht dargestellt) aus der Suspension heraus- und dann zwischen die Druckplatten 10 transportiert. Die apparativen Details, z.B. die Aufbringung der axialen Anpreßkräfte an die Scheiben 9 und das Abtransportieren des eingedickten Faserstoffes aus dem Bereich zwischen den Scheiben heraus ist hier nicht dargestellt.

## Patentansprüche

1. Verfahren zur mehrstufigen Entwässererung einer Faserstoffsuspension (S1) mit einer Vorentwässerung, bei der die zu entwässernde Faserstoffsuspension (S1) sich in einem oben offenen Behälter (5) befindet und sich an eine bewegte, perforierte erste Fläche (1) aufgrund beidseitig der perforierten ersten Fläche (1) unterschiedlicher Drücke anlegt und dabei vorentwässert wird,
wobei anschließend durch die Bewegung der ersten Fläche (1) die vorentwässerte Suspension (S2) aus der Faserstoffsuspension (S1) nach oben heraustransportiert wird und
danach zur Nachentwässerung in einen Eindikkungsbereich (3) gelangt, der zwischen der ersten Fläche (1) und mindestens einer zur ersten Fläche (1) konvergierend verlaufenden zweiten Fläche (2) gebildet wird wobei,
anschließend der eingedickte Faserstoff (S3) aus dem Bereich der ersten Fläche (1) entfernt wird, wobei,
die zweite Fläche (2) und die erste Fläche (1) mit einer Kraft gegeneinander gedrückt werden, und wobei
die zweite Fläche (2) im wesentlichen raumfest gehalten wird und eine Relativbewegung durch die Bewegung der ersten Fläche (1) auftritt.

2. Verfahren nach Anspruch 1,
**dadurch gekennzeichnet,**
**daß** die zweite Fläche (2) perforiert ist.

3. Verfahren nach Anspruch 1,
**dadurch gekennzeichnet,**
**daß** die zweite Fläche (2) undurchlässig ist.

4. Verfahren nach einem der voranstehenden Ansprüche,
**dadurch gekennzeichnet,**
**daß** die zweite Fläche (2) zur Faserstoffseite hin eine reibkrafterhöhende Oberfläche hat.

5. Verfahren nach Anspruch 1, 2, 3 oder 4,
**dadurch gekennzeichnet,**
**daß** die zweite Fläche (2) zu einer gespannten, flexiblen Bahn (4) gehört.

6. Verfahren nach Anspruch 5, unter Ausschluß von Anspruch 3,
**dadurch gekennzeichnet,**
**daß** die flexible Bahn (4) ein Siebgewebe ist.

7. Verfahren nach einem der voranstehenden Ansprüche,
**dadurch gekennzeichnet,**
**daß** die erste Fläche (1) von einer horizontal angeordneten, zylindrischen Siebtrommel gebildet wird, in deren Inneres das Filtrat eindringt.

8. Verfahren nach einem der voranstehenden Ansprüche,
**dadurch gekennzeichnet,**
**daß** im überwiegenden Teil des Eindickungsbereiches (3) kein Unterdruck an die erste Fläche (1) gelegt wird.

9. Verfahren nach einem der Ansprüche 1 bis 4,
**dadurch gekennzeichnet,**
**daß** die erste Fläche (1) durch mindestens eine Seitenfläche von mindestens einer Hohlscheibe gebildet wird, in deren Inneres das Filtrat eindringt.

10. Verfahren nach einem der Anspruch 9,
**dadurch gekennzeichnet,**
**daß** die erste Fläche (1) vom Rotor eines an sich bekannten Scheibenfilterapparates gebildet wird und daß die zweite Fläche (2) mit einer im wesentlichen axialen Kraft gegen Teile des Rotors gedrückt wird.

11. Verfahren nach einem der voranstehenden Ansprüche,
**dadurch gekennzeichnet,**
**daß** die im Bereich der Vorentwässerung beidseitig der ersten Fläche (1) anliegende Druckdifferenz lediglich durch unterschiedlich hohe Füllstände von Suspension und Filtrat bedingt ist.

12. Verfahren nach einem der Ansprüche 1 bis 10,
**dadurch gekennzeichnet,**
**daß** im Bereich der Vorentwässerung ein höherer Unterdruck angelegt wird, als er dem durch unterschiedlich hohe Füllstände bedingten hydrostatischen Druckunterschied beiderseits der ersten Fläche (1) entspricht.

13. Verfahren nach Anspruch 12,
**dadurch gekennzeichnet,**
**daß** der angelegte Unterdruckzwischen 0,1 und 0,3 bar beträgt

14. Verfahren nach einem der voranstehenden Ansprüche,
**dadurch gekennzeichnet,**
**daß** am Ende des Eindickungsbereiches (3) eine Saugzone (8) folgt, in der Unterdruck anliegt.

15. Verfahren nach Anspruch 14,
**dadurch gekennzeichnet,**
**daß** der Unterdruck durch die erste Fläche (1) von der nicht mit Stoff belegten Seite her über eine Umfangslänge von maximal 100 mm angelegt wird.

16. Verfahren nach Anspruch 5 oder 6,
**dadurch gekennzeichnet,**
**daß** die gespannte flexible Bahn (4) mit einer Geschwindigkeitvonweniger als 2 m/min bewegt wird.

17. Verfahren nach Anspruch 16,
**dadurch gekennzeichnet, ,**
**daß** die gespannte flexible Bahn (4) außerhalb des Eindickungsbereiches (3) gereinigt wird.

18. Verfahren nach einem dervoranstehenden Ansprüche
**dadurch gekennzeichnet,**
**daß** die Faserstoffschicht im Eindickungsbereich (3) infolge der Haft- und Reibkräfte an den Flächen (1 und 2) und der Relativbewegung beider Flächen (1 und 2) aufgerissen wird und sich röllchenartige Agglomerate bilden.

19. Trommeleindicker zur Durchführung des Verfahrens nach einem der voranstehenden Ansprüche unter Ausschluß der Ansprüche 9 und 10, mit folgenden Elementen:
einem oben offenen Behälter (5) für die zu entwässernde Faserstoffsuspension (S 1),
einem darin horizontal eingesetzten rotierbaren Siebzylinder, der die erste Fläche (1) aufweist,
einem oberhalb des Suspensionsfüllstandes gelegenen Preßelement, das zum Siebzylinder hin die zweite Fläche (2) aufweist, sich im wesentlichen über die Breite des Siebzylinders erstreckt und unter Kraftwirkung gegen die erste Fläche (1) angestellt werden kann,
einer Vorrichtung zur Entfernung von eingedicktem Faserstoff von der Oberfläche des Siebzylinders,
**dadurch gekennzeichnet,**
**daß** die zweite Fläche (2)
sich über einen Umfangswinkel α von wenigstens 15 ° entlang der Siebtrommel erstreckt,
am stromabwärtigen Ende auf einen Abstand an die Siebtrommel genähert werden kann, der zwischen 0 und 20 mm liegt und
eine relbkrafterhöhende Oberfläche aufweist, und
**daß** die zweite Fläche (2) in Umfangsrichtung stillsteht.

20. Trommeleindicker nach Anspruch 19,
**dadurch gekennzeichnet,**
**daß** der Siebzylinder durch radiale Trennwände (11) in wenigstens 16 Sektionen unterteilt ist.

## Claims

1. Method for multi-stage dewatering of a fibre suspension (S1) with a pre-dewatering in which the fibre suspension (S1) to be dewatered is located in an open-topped tank (5) and abuts against a moving perforated first surface (1) because of the different pressures on both sides of the perforated first surface (1) and is thereby dewatered,
next the pre-dewatered suspension (S2) being conveyed upwardly out of the fibre suspension (S1) because of the movement of the first surface (1) and
after that, proceeding for subsequent dewatering into a thickening region (3) which is formed between the first surface (1) and at least one second surface (2) which extends in a converging manner towards the first surface (1),
subsequently the thickened fibrous material (S3) being removed from the region of the first surface (1),
the second surface (2) and the first surface (1) being pressed against each other with a force, and
the second surface (2) being maintained in an essentially stationary manner and a relative movement occurring by means of the movement of the first surface (1).

2. Method according to claim 1,
**characterised in that**
the second surface (2) is perforated.

3. Method according to claim 1,
**characterised in that**
the second surface (2) is impermeable.

4. Method according to one of the preceding claims,
**characterised in that**
the second surface (2) has a surface which increases the frictional force towards the fibrous material side.

5. Method according to claim 1, 2, 3 or 4,
**characterised in that**
the second surface (2) is part of a taut, flexible web (4).

6. Method according to claim 5, with the exception of claim 3,
**characterised in that**
the flexible web (4) is a wire-screen fabric.

7. Method according to one of the preceding claims,
**characterised in that**
the first surface (1) is formed by a cylindrical screen drum, which is disposed horizontally and into the interior of which the filtrate penetrates.

8. Method according to one of the preceding claims,
**characterised in that**
no low pressure is applied to the first surface (1) in the predominant part of the thickening region (3).

9. Method according to one of the claims 1 to 4,
**characterised in that**
the first surface (1) is formed by at least one lateral surface of at least one hollow disc, into the interior of which the filtrate penetrates.

10. Method according to one of the claim 9,
**characterised in that**
the first surface (1) is formed by the rotor of a disc filter apparatus, which is known per se, and **in that** the second surface (2) is pressed against parts of the rotor with an essentially axial force.

11. Method according to one of the preceding claims,
**characterised in that**
the pressure difference applied on both sides of the first surface (1) in the region of the pre-dewatering is conditioned only by levels of suspension and filtrate of differing height.

12. Method according to one of the claims 1 to 10,
**characterised in that**
a higher low pressure is applied in the region of the pre-dewatering than corresponds to the hydrostatic pressure difference on both sides of the first surface (1), said pressure difference being conditioned by levels of differing height.

13. Method according to claim 12,
**characterised in that**
the applied low pressure is between 0.1 and 0.3 bar.

14. Method according to one of the preceding claims,
**characterised in that**
a suction zone (8), in which the low pressure is applied, follows at the end of the thickening region (3).

15. Method according to claim 14,
**characterised in that**
the low pressure is applied through the first surface (1), from the direction of the side which is not covered with material, over a circumferential length of maximum 100 mm.

16. Method according to claim 5 or 6,
**characterised in that**
the taut, flexible web (4) is moved at a speed of less than 2 m/min.

17. Method according to claim 16,
**characterised in that**
the taut, flexible web (4) is cleaned outwith the thickening region (3).

18. Method according to one of the preceding claims,
**characterised in that**
the fibrous material layer in the thickening region (3) is torn off as a result of the adhesive and frictional forces on the surfaces (1 and 2) and as a result of the relative movement of both surfaces (1 and 2), and roll-like agglomerates are formed.

19. Drum thickener for implementing the method according to one of the preceding claims, with the exception of claims 9 and 10, having the following elements:
an open-topped tank (5) for the fibre suspension (S1) to be dewatered,
a rotatable screen cylinder, which is inserted horizontally therein, and has the first surface (1),
a compression element, which is situated above the suspension level and has the second surface (2) towards the screen cylinder, extends essentially across the width of the screen cylinder and can be placed against the first surface (1) under the effect of a force,
a device for removing thickened fibrous material from the surface of the screen cylinder,
**characterised in that**
the second surface (2)
extends across a circumferential angle α of at least 15° along the screen drum.
can be made to approach the screen drum at a spacing at the downstream end, said spacing being between 0 and 20 mm and has a surface which increases the frictional force, and
**in that** the second surface (2) remains stationary in the circumferential direction.

20. Drum thickener according to claim 19,
**characterised in that**
the screen cylinder is divided into at least 16 sections by means of radial separating walls (11).

## Revendications

1. Procédé de déshydratation en plusieurs étapes d'une suspension de matière fibreuse (S1), avec une pré-déshydratation au cours de laquelle la suspension de matière fibreuse (S1) à déshydrater se trouve dans un récipient (5) ouvert à sa partie supérieure, et s'applique contre une première surface perforée (1) déplacée, en raison de pressions différentes des deux côtés de la première surface perforée (1), et est ainsi pré-déshydratée, la suspension pré-déshydratée (S2) étant ensuite extraite vers le haut de la suspension de matière fibreuse (S1), sous l'effet du mouvement de la première surface (1), et parvenant ensuite, pour la post-déshydratation, dans une zone d'épaississement (3) qui est formée entre la première surface (1) et au moins une deuxième surface (2), convergente par rapport à la première surface (1), la matière fibreuse épaissie (S3) étant ensuite éliminée de la zone de la première surface (1), la deuxième surface (2) et la première surface (1) étant pressées l'une contre l'autre sous l'effet d'une force, et la deuxième surface (2) étant maintenue sensiblement fixe dans l'espace, un mouvement relatif se produisant sous l'effet du mouvement de la première surface (1).

2. Procédé selon la revendication 1, **caractérisé par le fait que** la deuxième surface (2) est perforée.

3. Procédé selon la revendication 1, **caractérisé par le fait que** la deuxième surface (2) est imperméable.

4. Procédé selon l'une des revendications précédentes, **caractérisé par le fait que** la deuxième surface (2) présente, vers le côté de la matière fibreuse, une surface qui accroît la force de friction.

5. Procédé selon la revendication 1, 2, 3 ou 4, **caractérisé par le fait que** la deuxième surface (2) fait partie d'une bande flexible (4) tendue.

6. Procédé selon la revendication 5, avec exclusion de la revendication 3, **caractérisé par le fait que** la bande flexible (4) est un tissu de tamisage.

7. Procédé selon l'une des revendications précédentes, **caractérisé par le fait que** la première surface (1) est formée par un tambour-tamis cylindrique, disposé horizontalement, à l'intérieur duquel pénètre le filtrat.

8. Procédé selon l'une des revendications précédentes, **caractérisé par le fait qu'**aucune pression ne s'applique sur la première surface (1) dans la majeure partie de la zone d'épaississement (3).

9. Procédé selon l'une des revendications 1 à 4, **caractérisé par le fait que** la première surface (1) est formée par au moins une surface latérale d'au moins un disque creux à l'intérieur duquel pénètre le filtrat.

10. Procédé selon la revendication 9, **caractérisé par le fait que** la première surface (1) est formée par le rotor d'un appareil filtrant à disque, connu par lui-même ; et **par le fait que** la deuxième surface (2) est pressée contre des parties du rotor, par une force sensiblement axiale.

11. Procédé selon l'une des revendications précédentes, **caractérisé par le fait que** la différence de pression qui s'applique dans la zone de la pré-déshydratation, des deux côtés de la première surface (1), est conditionnée uniquement par des niveaux de hauteur différente de la suspension et du filtrat.

12. Procédé selon l'une des revendications 1 à 10, **caractérisé par le fait que**, dans la zone de la pré-déshydratation, est appliquée une dépression supérieure à celle qui correspond à la différence de pression hydrostatique, conditionnée par des niveaux de hauteur différente, des deux côtés de la première surface (1).

13. Procédé selon la revendication 12, **caractérisé par le fait que** la dépression appliquée est comprise entre 0,1 et 0,3 bar.

14. Procédé selon l'une des revendications précédentes, **caractérisé par le fait qu'**à la fin dé la zone d'épaississement (3), fait suite une zone d'aspiration (8) dans laquelle s'applique une dépression.

15. Procédé selon la revendication 14, **caractérisé par le fait que** la dépression traversant la première surface (1) est appliquée, depuis le côté dépourvu de matière, sur une longueur périphérique de 100 mm au maximum.

16. Procédé selon la revendication 5 ou 6, **caractérisé par le fait que** la bande flexible (4) tendue est déplacée à une vitesse inférieure à 2 m/mm.

17. Procédé selon la revendication 16, **caractérisé par le fait que** la bande flexible (4) tendue est nettoyée à l'extérieur de la zone d'épaississement (3).

18. Procédé selon l'une des revendications précédentes, **caractérisé par le fait que** la couche de matière fibreuse, dans la zone d'épaississement (3), se désagrège par suite des forces d'adhérence et de friction sur les surfaces (1 et 2) et du mouvement relatif de$ deux surfaces (1 et 2), et il se forme des agglomérats de type petits rouleaux.

19. Epaississeur à tambour pour la mise en oeuvre du procédé selon l'une des revendications précédentes, avec exclusion des revendications 9 et 10, comportant les éléments suivants :
un récipient (5) ouvert à sa partie supérieure, pour la suspension de matière fibreuse (S1) à déshydrater,
un cylindre de tamisage rotatif, inséré horizontalement à l'intérieur de celui-ci et présentant la première surface (1),
un élément de pression qui est placé au-dessus du niveau de la suspension, présente la deuxième surface (2) vers le cylindre de tamisage, s'étend sensiblement sur la largeur du cylindre de tamisage et peut être ajusté contre la première surface (1), sous l'effet d'une force,
un dispositif pour éliminer la matière fibreuse épaissie de la surface du cylindre de tamisage,
**caractérisé par le fait**
**que** la deuxième surface (2)
s'étend sur un angle périphérique α d'au moins 15° le long du tambour tamis,
peut être rapprochée du tambour tamis, à l'extrémité aval, à une distance qui se situe entre 0 et 20 mm, et
présente une surface qui accroît la force de friction ;
et **que** la deuxième surface (2) est à l'arrêt dans la direction périphérique.

20. Epaississeur à tambour selon la revendication 19, **caractérisé par le fait que** le cylindre de tamisage est divisé en au moins 16 sections, par des cloisons radiales (11).
